# EUROPEAN PATENT APPLICATION

(11) **EP 4 280 062 A1**
(43) Date of publication of application: **22.11.2023**
(21) Application number: 23171000.5
(22) Date of filing: 02.05.2023
(51) Int. Cl.: G06F 9/50, G06F 9/54

(54) **AD-HOC DELEGATION OF CONSOLE TASKS TO A CONSOLE**

(30) Priority: 20.05.2022 US 202263344082 P
(71) Applicant: Honeywell International Inc., Charlotte, NC 28202 (US)
(72) Inventor: MCADAM, Rohan James, Charlotte, 28202 (US); LAYCOCK, Graeme John, Charlotte, 28202 (US)
(74) Representative: Houghton, Mark Phillip

(57) **Abstract**

One embodiment is for a task selection module which enables an operator to select a task to delegate ad-hoc, a task comprising an action that includes a plurality of interactions with a second device or system.

## Description

### CROSS-REFERENCE TO RELATED APPLICATIONS

The present application herein incorporates by reference in its entirety, US Patent Publication No. 2021/0389748.

### BACKGROUND

The job of an industrial console operator is complex with several major factors that can limit an operator's effectiveness. Two such factors are an operator's ability to acquire and maintain awareness of the current operational situation and their ability to attend to the most important operational tasks. Both factors can be adversely impacted by the need to perform numerous small tasks that increase their workload and divide their attention. Examples of such tasks include monitoring increases or decreases in production process variables, incrementally ramping a control variable from one value to another over a period of time, temporarily overriding a regulatory control loop, requesting a field operator to perform an action in the field, and others.

A common characteristic of these tasks is that they often involve numerous interactions with devices such as the automation system console, two-way radio, or any other suitable device, resulting in increased workload. Another characteristic of these tasks is that they may occur over an extended period of time. Tasks such as these also divide the operator's attention between the task and the broader operational situation they are managing. A further characteristic of the type of task addressed here is that they arise on an ad hoc basis, rather than as part of a structured procedure or work instruction. The need to perform these tasks arises from current operational contingencies rather than a pre-defined sequence of operations such as starting up or shutting down as process unit (e.g., a crude oil distillation column).

One solution to this problem is for the console operator to employ an assistant, perhaps junior operator to which they can delegate these tasks. This would free the operator up to concentrate on the broader operational situation knowing that these tasks were being performed reliably on their behalf. However, the cost and scarcity of assistant operators and the sporadic need for such assistance typically makes such a solution impractical.

### BRIEF DESCRIPTION OF THE DRAWINGS

FIG. 1 is a flowchart that illustrates the operation of ad-hoc delegation of console tasks to a console according to one embodiment.
FIG. 2 is a system diagram that illustrates the operation of one embodiment of a console task delegation mechanism.
FIG. 3 is a diagram that illustrates a layout of a console HMI according to one embodiment of a console task delegation mechanism.
FIG. 4 is a diagram that illustrates a layout of a console HMI according to another embodiment of a console task delegation mechanism.
FIG. 5 is a diagram that illustrates a layout of a console HMI according to another embodiment of a console task delegation mechanism.

### SUMMARY

One embodiment is a device comprising a task selection module for enabling an operator to select a task to delegate ad-hoc, a task comprising anaction that includes a plurality of interactions with a second device, a task execution module for executing the task when delegated ad-hoc by the operator, an update module for updating a status of the task while the task is executing in the task execution module, and an alert module for notifying the operator upon completion of the task by the task execution module.

Another embodiment is a system, which comprises an HMI system for accepting input from a user to delegate a task, the task being associated with a second system, an execution engine for receiving the task from the HMI system and for managing the task as it operates at the second system, a control loop for managing a variable associated with the second system, wherein the execution engine is capable of changing the variable when required by the task, and a field application for receiving a delegation of a sub-task from the execution engine, when the sub-task is required by the task, the field application capable of providing a notification to the execution engine when the sub-task is finished.

Another embodiment is an interface comprising an area associated with a presentation of information, the area having at least two dimensions, one or more rows in the area, the rows extending in a first dimension, wherein successive rows correspond to successive periods of time, one or more columns in the area, the columns extending in a second dimension, wherein each column corresponds to a device or a system that is capable of receiving a delegation of a task, and a visual indicator associated with the task, wherein the visual indicator is shown at an intersection of one of the rows and one of the columns.

### DETAILED DESCRIPTION

Various embodiments provide a way for a console operator to delegate tasks to the console itself rather than a human assistant. The nature of such tasks that can be delegated will be discussed in more detail herein. In one example, a task includes an action that involves more than one interaction with a second device or system. By delegating these types of tasks an operator's situational awareness can be improved and their workload and demands on their attention reduced.

Examples of tasks that can be delegated to the console include, but are not limited to timing-based tasks, monitoring-based tasks, ramping-based tasks, overriding-based tasks, and dispatching-based tasks. A timed reminder is an example of timing-based task. During a timed reminder, the operator is alerted with a specified message at a specified time or after a specified time interval. A timed reminder can be used as a way for an operator to keep track of things they need to remember without having to commit them to their own memories or some other aid external to a human-machine interface (HMI).

Monitoring changes in a process variable is one example of a monitoring-based task. One example of this task includes monitoring a nominated process variable and alerting the operator when the variable reaches a nominated target value. An optional timeout might be specified after which the system stops monitoring the variable and alerts the operator that the target variable was not reached. There is no need for the operator to attend to the value of the process variable until the target is reached or the timeout period expires.

One example of a ramping-based task includes ramping a process variable. During this task a series of incremental changes can be made to the process variable. One example includes a control loop where a measured value changes using a control loop setpoint. The process variable, the target value, and the period of time over which to ramp the variable can be specified by the operator. The operator is alerted when the variable reaches the target variable, or if the ramping stalls or otherwise takes longer than an optional timeout period. There is typically no need for the operator to attend to the value of the process variable until the target is reached or the timeout period expires.

One example of an overriding-based task includes overriding a control loop. In one example, this type of task can disable automatic control of a process variable and set it to a specific value and restore automatic control with a new setpoint reflecting the new operating value. This can be used to save the operator from having to change the mode of the control loop, set the output of the control loop, restore the mode of the control loop, and enter a new setpoint. It also can remove errors associated with these operations, such as forgetting to restore the mode of the control loop.

One example of a dispatching-based task includes dispatching field activities. In one example, this type of task can send a request to a field operator to perform a field activity and can report the result without the console operator having to call the field operator over a two-way radio. The request may be routed to the field operator by a mobile application connected to the console HMI for this purpose. In other embodiments, a plurality of possible variations on the tasks described above can be used. There also tasks that can be automated according to the present invention beyond the examples provided above. A feature of the disclosed invention is that these tasks can be delegated to the console as and when needed as determined by current operational contingencies.

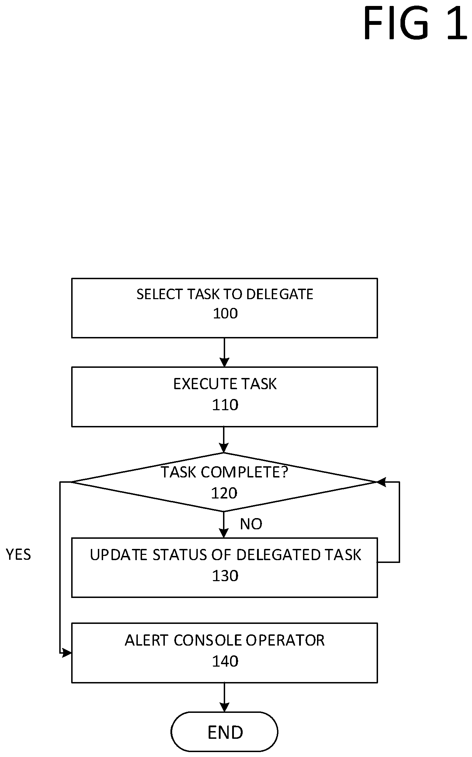

FIG. 1 is a flowchart that illustrates the operation of ad-hoc delegation of console tasks to a console according to one embodiment. At step 100, a task is selected. This could be, for example, an operator selecting a task in a user interface and communicating the selection to the user interface and/or it could include the user interface itself receiving the inputs and processing the selection and/or software that enables this capability. It should be understood that tasks, as defined herein, also includes the timing-based tasks, the monitoring-based tasks, the ramping-based tasks, the overriding-based tasks, and the dispatching-based tasks, and others. At step 110 the task is executed. This could occur, for example in a computing device having a processor and general processing capabilities, or other types of execution engines, as herein defined later. At step 120, the system determines whether the task is complete? If not, the status of the task is updated at step 130. Otherwise, when the task completes, the operator is alerted at step 140. This could be in the form of an alarm, audio signal, video signal, and the like.

The steps of FIG. 1 allow an operator to select a task to delegate and initiate the execution of the task. While the task is executing, the status of the task is presented to the operator so they can monitor the progress of the task. Once a task completes, the operator is alerted so they know that the task is finished. Tasks typically complete normally, but they can also complete with an error condition. It is within the scope of the invention to handle tasks that complete with an error condition as well.

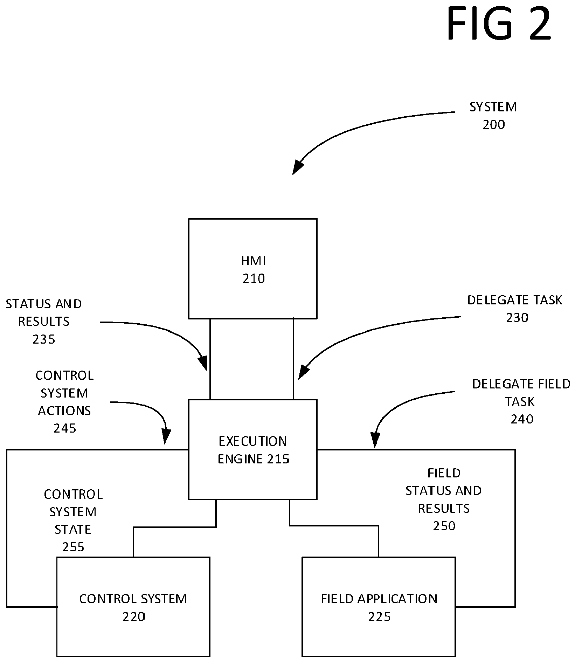

FIG. 2 is a system diagram that illustrates the operation of one embodiment of a console task delegation mechanism. The system 200 of FIG. 2 is an environment suitable for carrying out the steps described with respect to FIG. 1, and others. The system 200 includes an HMI 210. The HMI 210 enables an operator to select a task to delegate and to delegate the task along a communication path 230. The communication path 230 could include, for example, a wired or wireless connection and/or a combination of communication paths (e.g., wi-fi, cellular, ethernet, bluetooth, etc.) as is commonly understood in the art. A primary role of the HMI 210 is to provide operators with a user interface for interacting with the other components of the system 200. Many of those interactions are candidates for delegation to the system 200. In other examples, the HMI 210 can provide a user interface for operators to: select tasks to delegate; monitor the progress of tasks, receive alerts associated with the tasks, and others.

An execution engine 215 communicates with the HMI 210 so that it can manage the operation, execution, and/or other processing throughout the lifetime of the task. The execution engine can be used, in one example, to automate delegated tasks. Task delegation can be initiated in the HMI 210 and task delegation requests can be sent to the execution engine 215 along communication path 230 via a procedure call or API request, for example. Task delegation requests can include one or more parameters that specify the details of the request to be delegated.

For some tasks, the execution engine 215 may draw on capabilities of an underlying advanced and regulatory control system 220. For example, a ramping task that is delegated along the communication path 230, would typically involve incrementally changing the set point of the control loop that an operator wishes to ramp in control system 220. The interaction can be achieved via a communication path 245 for control system actions. In one example there are two categories of tasks that impact the control system 220 - monitoring and control. Tasks that involving monitoring the values of process variables require the execution engine 215 to query the control system 220 for current values of these variables via communication path 245. This may be done once off or on a periodic basis, depending on the needs of the delegated task. The values to monitor can be provided as parameters along with the task delegation request along communication path 245.

The execution engine 215 performs control actions on the control system 220 when the task involves manipulating the control system. For example, the setpoint of a regulatory control loop or a limit on an advanced control strategy may be incrementally changed in a process ramping task. In this case the time over which the control loop or control strategy limit to ramp, the target value, and the time over which the ramping should take place would be provided as parameters along with the task delegation request along communication path 245. The increments by which the setpoint or limit is ramped may be specified as an optional parameter or computed by the execution engine 215. The task would execute by continuing to increment the setpoint or limit until the target value has been reached.

The progress of the ramping can be reflected in the HMI 210, including an indication of whether the ramping was proceeding as expected or not. Another example is a control system override task where the mode of a regulatory control loop may be changed from AUTO to MANUAL, the output of the loop set to a required value, the mode returned to MANUAL, and the setpoint changed to the new operating value for the control loop. In this case, the control loop to override and the target operating value would be specified as parameters along with the task delegation request along communication path 245.

In one embodiment, the control system 220 manages a production process using regulatory control loops and advanced control strategies. Regulatory control loops typically provide automated control of the production process by manipulating a physical element of the process, such as a control valve, to control another physical aspect of the process such as a level in a tank. Regulatory control can extend to control of levels, temperatures, pressures, densities, and others. Operation of the control loops often involves operator intervention to change setpoints (e.g., the target level in a tank) or to override the operation of the automatic algorithm as required by the operational situation. Regulatory control loops typically execute in dedicated hardware controllers co-located with the process being controlled.

Advanced control strategies provide a higher-level form of control that automatically determines setpoints for the regulatory control system according to a model-based algorithm. The model-based algorithm can optimize the operation of the process with respect to some objective. These algorithms typically operate across many regulatory control loops. Operator intervention in the operation of these algorithms typically involves changing limits on the action of the algorithm on the regulatory control system. Advanced control strategies may execute on central computers that communicate with the regulatory control system over a communication network, although they may also execute in the same controllers use for the regulatory control system.

In another example, the execution engine 215 may dispatch requests to a field operator along a communication path 240. A field operator mobile application 225 is coupled to the execution engine 215 via the communication path 240. In this way, a field operator can be dispatched to perform a sub-task when it is needed by the execution engine 215. One embodiment uses a push notification mechanism along communication path 255. The operator can then view the tasks on the application and enter the results of the task. Some examples include, but are not limited to, completion status, field data, observations, and comments. Thereafter, the field application 225 can send the results back to the execution engine 215 along communication path 255, which can then end the task and alert the operator to the results of the task.

In one example, the field application 225 is a mobile application used by field operators in an industrial production facility. The field application 225 can provide them with an HMI that gives then access to information from the control system 220, such as process variable values, trends of process values, alarms, and others. The information can be provided in a form suitable for mobile work. In the context of this embodiment, the field application 225 also provides a user interface for receiving tasks delegated by the console operator and returning the results of those tasks.

In another example, the execution engine 215 can handle the task internally, as in the example of keeping track of time for a reminder the operator has delegated via the HMI 210. In this example, the execution engine 215 can keep track of the passage of time and update the status of the task with the time remaining along communication path 260. When the reminder comes due, the execution engine 215 ends the task and alerts the operator with the reminder. The reminder text and reminder time (absolute or relative) can be provided as parameters along with the task delegation request. It should be appreciated that the execution engine 215 may be extended to support a broader range of types of tasks and integrations with other systems, of which the above are just examples.

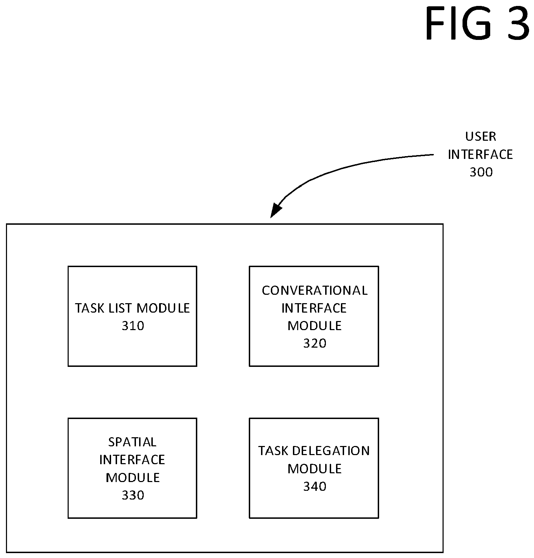

FIG. 3 is a diagram that illustrates a layout of a console HMI according to one embodiment of a console task delegation mechanism. FIG. 3 includes and an interface that can have a plurality of user interface elements. In the present embodiment, a task list module 310 is used to provide a list of tasks that have already been delegated to an execution engine. In various embodiments, the task list module 310 can show information about the task such as the timing, the type of task, and the status of the variables and/or systems impacted by the task. A conversational interface module 320 can also be used which provides an alternative to a list-based option of delegated tasks. The conversational interface module 320 can be used in instances where it makes the operator's management of the needed information easier to handle. In this example, the operator is enabled via the conversational interface module 320 to delegate tasks in a manner that mirrors talking to a human.

Another embodiment of the user interface 300 can include a task delegation module 340. The task delegation module 340 is a subset of the interface 300, which can provide a plurality of options to the operator associated with the delegation and/or the operation of a task during its lifetime. In one example, the task delegation module 340 enables the operator to delegate a new task, which would then be displayed in the task list module 310. In another example, a spatial interface module 330 is used. The spatial interface module 330 can have an area associated with a presentation of information, the area having at least two dimensions arranged as rows and columns. One or more rows can extend in a first dimension where successive rows correspond to successive periods of time. One or more columns can extend in a second dimension, where each column corresponds to a device or a system that is capable of receiving a task. The spatial interface module 330 can also use a visual indicator associated with the task, wherein the visual indicator is shown at an intersection of one of the rows and one of the columns. It should be understood by someone having ordinary skill in the art that the user interface 300 can have other GUI elements and the previous description is for the purpose of example only.

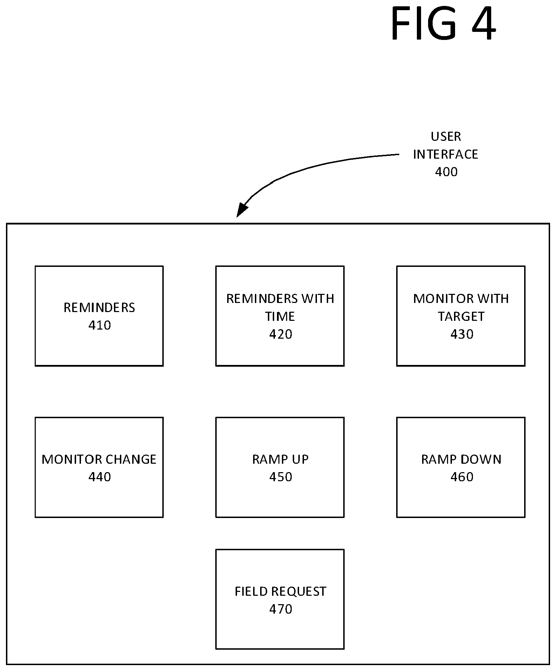

FIG. 4 is a diagram that illustrates a layout of a console HMI according to another embodiment of a console task delegation mechanism. FIG. 4 shows an interface 400, which describes the task delegation module 340 in more detail. Interface 400 can be used to provide a plurality of options to the operator associated with the delegation and/or the operation of a task during its lifetime. These options can be in the form of graphical user interface (GUI) elements, "buttons", or other visual indicators that allow human input, such as hovering over the button with a mouse cursor and selecting the button.

Some examples of buttons that can be user are reminders 410, reminders with time 420, monitor with target 430, monitor change 440, ramp up 450, ramp down 460, and field request 470. There are numerous variations on how tasks might be delegated through interface 400, including using additional screens or interface portions for carrying out a portion of a task. In other examples, tasks can be represented as they execute. In other examples, the operator can be alerted at the conclusion of the delegated task. For example, tasks related to a control loop may be accessible from context menus and detail pages associated with the loop, in which case some of the required task parameters can be provided automatically, such as the control loop tag name in a context-sensitive fashion.

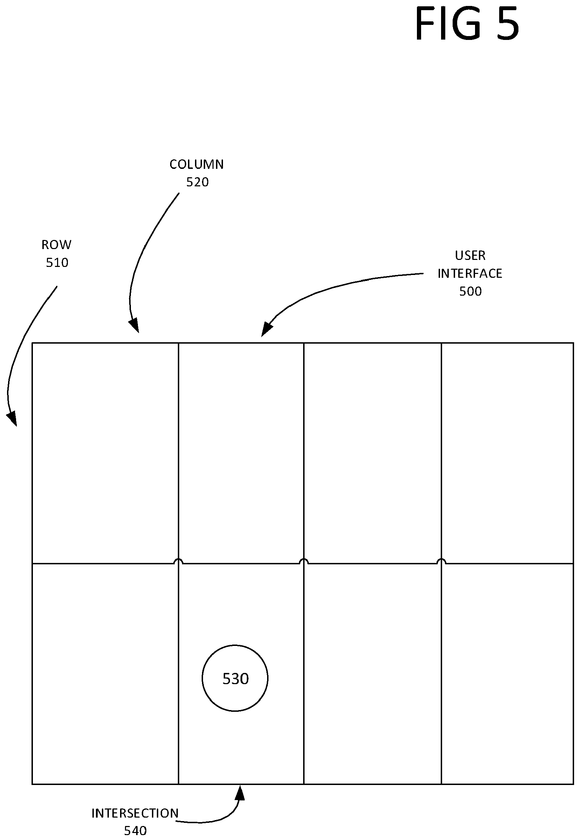

FIG. 5 is a diagram that illustrates a layout of a console HMI according to another embodiment of a console task delegation mechanism. FIG. 5 includes an interface 500 that can have an area associated with a presentation of information, the area having at least two dimensions arranged as rows 510 and columns 520. One or more rows 510 can extend in a first dimension where successive rows correspond to successive periods of time. One or more columns 520 can extend in a second dimension, where each column corresponds to a device or a system that is capable of receiving and/or has been delegated a task. The interface 500 can also use a visual indicator 530 associated with the task, wherein the visual indicator 530 is shown at an intersection of one of the rows and one of the columns 540. An interface 500 can provide a representation of delegated tasks that execute over a period of time, such as ramping a variable or a time-based reminder, as described previously herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A device comprising:
a task selection module (340) for enabling an operator to select a task to delegate ad-hoc, a task comprising an action that includes a plurality of interactions with a second device or system;
a task execution module (310) for executing the task when delegated ad-hoc by the operator;
an update module (330) for updating a status of the task while the task is executing in the task execution module; and
an alert module (400) for notifying the operator upon completion of the task by the task execution module (310).

2. The device of claim 1, wherein the second device or system (200) includes a timer and wherein the task includes one or more alerts at a specified time or a specified time interval.

3. The device of claim 1, wherein the second device or system (200) includes a monitor and wherein the task includes determining when a variable reaches a target value.

4. The device of claim 1, wherein the second device or system (200) includes a ramping module and wherein the task includes ramping a variable towards a target value.

5. The device of claim 1, wherein the second device or system (200) includes a disabling module and wherein the task includes overriding a control loop.

6. The device of claim 1, wherein the second device or system (200) includes a dispatching module and wherein the task includes sending a request to a field operator (225).

7. A system comprising:
an HMI system (210) for accepting input from a user to delegate a task, the task being associated with a second system (200);
an execution engine (215) for receiving the task from the HMI system (210) and for managing the task as it operates at the second system (200);
a control loop (220) for managing a variable associated with the second system (200), wherein the execution engine (215) is capable of changing the variable when required by the task; and
a field application (225) for receiving a delegation of a sub-task from the execution engine (215), when the sub-task is required by the task, the field application (225) capable of providing a notification to the execution engine (215) when the sub-task is finished.

8. The system of claim 7, wherein the task includes an action that includes a plurality of interactions with the second system (200).

9. The system of claim 8, wherein the plurality of interactions include a ramping of a variable associated with the second system (200).

10. The system of claim 8, wherein the plurality of interactions include a monitoring of a variable associated with the second system (200).

11. The system of claim 8, wherein the plurality of interactions include an overriding of a control system (220) associated with the second system (200).

12. The system of claim 8, wherein the plurality of interactions include a dispatching associated with a field application system (225) associated with the second system (200).

13. The system of claim 8, wherein the HMI system (210) further includes one or more user interface elements.

14. The system of claim 13, wherein a first user interface element (300) is associated with a first task and a second user interface element (400) is associated with a second task.

15. An interface (500) comprising:
an area associated with a presentation of information, the area having at least two dimensions;
one or more rows (510) in the area, the rows extending in a first dimension, wherein successive rows correspond to successive periods of time;
one or more columns (520) in the area, the columns extending in a second dimension, wherein each column corresponds to a device or a system (200) that is capable of receiving a delegation of a task, and
a visual indicator (530) associated with the task, wherein the visual indicator (530) is shown at an intersection of one of the rows and one of the columns.
